**Europäisches Patentamt**

(19) **European Patent Office**

**Office européen des brevets**

(11) Veröffentlichungsnummer: **0 136 700**
**B1**

(12) # EUROPÄISCHE PATENTSCHRIFT

(45) Veröffentlichungstag der Patentschrift:
**04.10.89**

(51) Int. Cl.⁴: **F 16 F 13/00,** B 60 K 5/12

(21) Anmeldenummer: **84111786.4**

(22) Anmeldetag: **03.10.84**

(54) Motorlager mit hydraulischer Dämpfung.

(30) Priorität: **05.10.83 DE 3336204**

(43) Veröffentlichungstag der Anmeldung:
**10.04.85 Patentblatt 85/15**

(45) Bekanntmachung des Hinweises auf die Patenterteilung:
**04.10.89 Patentblatt 89/40**

(84) Benannte Vertragsstaaten:
**DE FR GB IT SE**

(56) Entgegenhaltungen:
**EP-A-0 069 787
DE-A-683 167
DE-A-2 652 501
DE-B-2 616 258
GB-A-500 004
GB-A-1 152 487
GB-A-2 382 372
US-A-1 912 270
US-A-2 019 052
US-A-3 756 551**

(73) Patentinhaber: **METZELER Gesellschaft mit beschränkter Haftung, Gneisenaustrasse 15, D-8000 München 50 (DE)**

(72) Erfinder: **Andrä, Rainer, Dr., Dehrnerstrasse 10, D-6250 Limburg (DE)**
Erfinder: **Hofmann, Manfred, Gerhard von Dietz-Strasse 15, D-6257 Hünfelden 1 (DE)**

(74) Vertreter: **Michelis, Theodor, Dipl.- Ing., Gneisenaustrasse 15, D-8000 München 50 (DE)**

**Beschreibung**

Die Erfindung betrifft ein Motorlager mit hydraulischer Dämpfung, insbesondere für Kraftfahrzeuge, mit mindestens einer flüssigkeitsgefüllten und eine angenähert kegelmantelförmige, gummielastische und als Tragfeder wirkende Umfangwand aufweisenden Kammer, die stirnseitig von einer Lagerplatte abgeschlossen ist, auf deren Oberseite als Schubelement mit einstellbarer Radialsteifigkeit eine Halterungsplatte unter Zwischenschaltung einer Elastomerschicht aufvulkanisiert ist.

Ein derartiges Motorlager ist aus der DE-B-2 616 258 bekannt. Die dabei zwischen der oberen Lagerplatte und der Halterungsplatte einvulkanisierte Elastomerschicht ermöglicht zwar auch eine gewisse Nachgiebigkeit in radialer Richtung und damit eine Entkopplung von Axial- und Radialsteifigkeit unabhängig von der Radialsteifigkeit der als Tragfeder wirkenden Umfangswandung.

Wie jedoch von Anwendungen konventioneller Motorlager bekannt ist, muß die Radialsteifigkeit häufig kleiner sein als die Axialsteifigkeit.

Darüber hinaus ist aus der GB-A-1 152 487 ein Schwingungsdämpfer zur Lagerung stationärer Maschinen bekannt, bei dem in eine stationäre, mit Bohrungen versehene Bodenplatte vertikale Zapfen einer darüberliegenden Lagerplatte ragen, wobei in die Bohrungen der Lagerplatte umgestülpte Hülsen aus flexiblem Material zur Aufnahme der Zapfen angeordnet sind. Durch den vorhandenen freien Ringraum ist damit auch eine gewisse Beweglichkeit in horizontaler Richtung gewährleistet und gleichzeitig eine Dämpfung von Vibrationen beliebiger Vorzugsrichtung sichergestellt.

Ausgehend von dem bekannten Stand der Technik liegt der vorliegenden Erfindung die Aufgabe zugrunde, ein hydraulisch gedämpftes Motorlager zu schaffen, das eine sehr geringe Radialsteifigkeit aufweist und bei dem insbesondere auf einfache Weise die Radialsteifigkeit unabhängig von der Axialsteifigkeit eingestellt werden kann.

Zur Lösung dieser Aufgabe ist erfindungsgemäß vorgesehen, daß die Halterungsplatte einen zylindrischen Ansatz aufweist, der in die freie Ausnehmung der ringförmig ausgebildeten Lagerplatte und in die flüssigkeitsgefüllte Lagerkammer hineinragt, wobei der Ansatz einen kleineren Durchmesser besitzt als die freie Ausnehmung der Lagerplatte, so daß ein umlaufender freier Ringspalt zwischen Ansatz und dem Innenumfang der ringförmigen Lagerplatte verbleibt.

Zweckmäßigerweise bedeckt die Elastomerschicht den Innenumfang der ringförmigen Lagerplatte derart, daß zwischen dieser Schicht und dem zylindrischen Ansatz der umlaufende freie Ringspalt verbleibt.

Durch diese Integration eines derartigen Schubelementes in herkömmliche hydraulisch dämpfende Motorlager kann auch bei einem derartigen Lager die Radialsteifigkeit unabhängig von der Axialsteifigkeit sehr weich eingestellt und durch einfache konstruktive Änderungen variiert werden. Darüber hinaus werden durch das Hineinragen des zylindrischen Ansatzes in die mit der Hydraulikflüssigkeit gefüllte Lagerkammer zusätzliche Strömungsvorgänge in dieser Kammer bei einer radialen Verschiebung des Ansatzes ausgenutzt, wodurch gleichzeitig die dynamische Radialsteifigkeit verändert und beeinflußt werden kann.

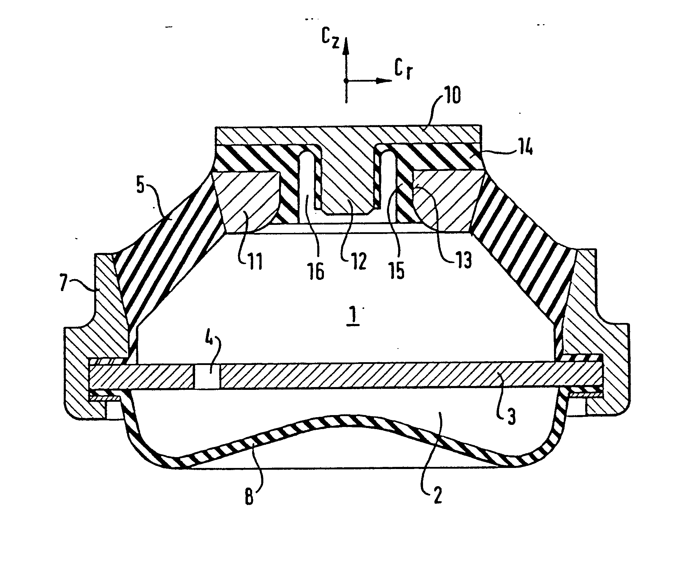

Anhand einer schematischen Zeichnung sind Aufbau und Wirkungsweise eines Ausführungsbeispiels nach der Erfindung näher erläutert. Dabei zeigt die einzige Figur einen Längsschnitt durch ein hydraulisch gedämpfes Motorlager mit dem integrierten Schubelement.

Wie aus der Figur ersichtlich, besteht das Motorlager im wesentlichen aus einer oberen Kammer 1 und einer unteren Kammer 2, die durch eine Zwischenplatte 3 mit einer Drosselstelle 4 voneinander getrennt sind. Die obere Kammer 1 wird dabei von einer starkwandigen, hohlkegelförmigen Kammerwandung 5 aus gummielastischem Material gebildet, die im wesentlichen als Tragfeder wirkt und ist an der oberen Stirnseite von der noch zu erläuternden Lagerplatte 11 abgeschlossen. Die untere Kammer 3 wird von einer beispielsweise tassenförmigen Kammerwandung 8 aus ebenfalls gummielastischem Material gebildet, die ebenfalls mit dem Flansch 7 haftend verbunden ist.

Gegen Belastungen in z-Richtung durch einen beispielsweise unmittelbar an die Halterungsplatte 10 angeschlossenen Motor weist dieses Lager eine gewisse Axialsteifigkeit $C_z$ und in horizontaler Richtung eine gewisse Radialsteifigkeit $C_r$ auf. Größe und Verhältnis von Axialsteifigkeit $C_z$ und Radialsteifigkeit $C_r$ werden bei herkömmlichen Motorlagern dieser Art allein durch Geometrie und Materialauswahl der Kammerwandung 5 bestimmt, so daß beide Steifigkeitswerte durch diese als Tragfeder wirkende Wandung gekoppelt sind. Wegen des relativ großen Einfederungsweges und der rotationssymmetrischen Bauweise derartiger Lager können dabei lediglich Verhältnisse von $C_r/C_z >$ 1 realisiert werden. Aus herkömmlichen Motorlagern ist jedoch bekannt, daß quer zur Fahrtrichtung oft ein Verhältnis von $C_r/C_z <$ 1 erforderlich ist, was bei Lagern der vorliegenden Bauart jedoch nur schwer verwirklicht werden kann.

Um jedoch eine unabhängig einstellbare Radialsteifigkeit $C_r$ zu erhalten, ist - wie aus der Figur ersichtlich - die Lagerplatte 11 ringförmig ausgebildet, während die zylindrische Halterungsplatte 10 einen zylindrischen Ansatz 12 aufweist, der in eine Ausnehmung 13 der ringförmigen Lagerplatte 11 ragt. Die Halterungsplatte 10 ist über eine Elastomerschicht 14 unmittelbar auf die Oberseite der Lagerplatte 11 aufvulkanisiert. Diese Elastomerschicht bedeckt zweckmäßigerweise auch die Wandung der Ausnehmung 13 und ggf. die Oberfläche des zylindrischen Ansatzes 12, wobei jedoch zwischen der die Ausnehmung 13 bedeckenden Schicht 15 und dem zylindrischen Ansatz 12 ein freier Ringspalt 16 verbleibt, der somit ebenfalls eine radiale Beweglichkeit der Halterungsplatte 10 ermöglicht.

Durch entsprechende Materialauswahl für die Elastomerschicht 14 und deren Dicke kann somit die Radialsteifigkeit $C_r$ dieser Lager weitgehend beliebig und insbesondere unabhängig von der Axialsteifigkeit $C_z$ eingestellt werden. Dabei können durch geringe konstruktive Änderungen Anpassungen an jeweils gewünschte Werte erreicht werden. Durch den freiliegenden Ringspalt 16 wird die Elastomerschicht nur auf Schub beansprucht, wobei die äußeren Begrenzungen dieser Ringspalte als Anschlag für seitliche Bewegungen der Halterungsplatte dienen.

Da der zylindrische Ansatz 12 frei in die mit Hydraulikflüssigkeit gefüllte Lagerkammer 1 hineinragt, werden bei radialen Bewegungen dieses Ansatzes 12 damit auch zusätzliche Strömungsvorgänge in der Kammer 1 erzeugt, wodurch sich die dynamische Radialsteifigkeit zusätzlich verändert bzw. variiert werden kann.

## Patentansprüche

1. Motorlager mit hydraulischer Dämpfung, insbesondere für Kraftfahrzeuge, mit mindestens einer flüssigkeitsgefüllten und eine angenähert kegelmantelförmige, gummielastische und als Tragfeder wirkende Umfangswand (5) aufweisenden Kammer (1), die stirnseitig von einer Lagerplatte (11) abgeschlossen ist, auf deren Oberseite als Schubelement mit einstellbarer Radialsteifigkeit eine Halterungsplatte (10) unter Zwischenschaltung einer Elastomerschicht (14, 15) aufvulkanisiert ist,

dadurch gekennzeichnet, daß die Halterungsplatte (10) einen zylindrischen Ansatz (12) aufweist, der in die freie Ausnehmung (13) der ringförmig ausgebildeten Lagerplatte (11) und in die flüssigkeitsgefüllte Lagerkammer (1) hineinragt, wobei der Ansatz (12) einen kleineren Durchmesser besitzt als die freie Ausnehmung (13) der Lagerplatte (11), so daß ein umlaufender freier Ringspalt (16) zwischen Ansatz (12) und dem Innenumfang der ringförmigen Lagerplatte (11) verbleibt.

2. Motorlager nach Anspruch 1, dadurch gekennzeichnet, daß die Elastomerschicht (14, 15) den Innenumfang der ringförmigen Lagerplatte (11) derart bedeckt, daß zwischen dieser Schicht (14, 15) und dem zylindrischen Ansatz (12) der umlaufende freie Ringspalt (16) verbleibt.

## Claims

1. Hydraulically damped engine bearing, in particular for motor vehicles, having at least one liquid-filled chamber (1) which has a rubber-elastic peripheral wall (5), which is shaped approximately like a cone-shaped shell and acts as a bearing spring, and is closed at its front end by a bearing plate (11), on the upper side of which a mounting plate (10) is vulcanised as a thrust element with adjustable radial rigidity, an elastomer layer (14, 15) being inserted between the thrust element and the mounting plate,

characterised in that the mounting plate, (10) has a cylindrical shoulder (12) which projects into the free recess (13) of the annular bearing plate (11) and into the liquid-filled bearing chamber (1), the shoulder (12) having a smaller diameter than the free recess (13) of the bearing plate (11) so that a continuous free annular gap (16) remains between the shoulder (12) and the internal periphery of the annular bearing plate (11).

2. Engine bearing according to claim 1, characterised in that the elastomer layer (14, 15) covers the internal periphery of the annular bearing plate (11) in such a manner that the continuous free annular gap (16) remains between this layer (14, 15) and the cylindrical shoulder (12).

## Revendications

1. Support de moteur à amortissement hydraulique, notamment pour des véhicules automobiles, comprenant une chambre (1) emplie d'au moins un liquide et comportant une paroi de pourtour (5) sensiblement en forme de surface de cône, ayant l'élasticité du caoutchouc, servant de ressort-porteur et qui est fermée du côté frontal par une plaque du support (1) sur le côté supérieur de laquelle est appliquée par une vulcanisation, avec interposition d'une couche en élastomère (14, 15), une plaque de maintien (10) servant d'élément de poussée à rigidité radiale réglable,

caractérisé en ce que la plaque de maintien (10) comporte un prolongement cylindrique (12) qui pénètre dans l'évidement (13) de la plaque-support (11) de forme annulaire et dans la chambre du support (1) emplie de liquide, le prolongement ayant un diamètre plus petit que l'évidement (13) de la plaque du support (11) de manière à laisser subsister une fente périphérique annulaire (16) entre le prolongement (12) et le pourtour intérieur de la plaque annulaire du support (11).

2. Support de moteur suivant la revendication 1, caractérisé en ce que la couche en élastomère (14, 15) recouvre le pourtour intérieur de la plaque annulaire du support (11) de manière à laisser subsister la fente périphérique annulaire (16) entre cette couche (14, 15) et le prolongement cylindrique (12).